(19) Europäisches Patentamt
European Patent Office
Office européen des brevets

(11) **EP 4 685 111 A1**

(12) **EUROPEAN PATENT APPLICATION**

(43) Date of publication:
**28.01.2026 Bulletin 2026/05**

(21) Application number: **24221510.1**

(22) Date of filing: **19.12.2024**

(51) International Patent Classification (IPC):
***C01B 32/21*** *(2017.01)*

(52) Cooperative Patent Classification (CPC):
**C01B 32/21; H01M 4/133; H01M 4/587;**
C01P 2004/62; C01P 2006/10; H01M 10/0525;
Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.07.2024 CN 202411004078**

(71) Applicant: **Nio Technology (Anhui) Co., Ltd
Hefei City, Anhui 230601 (CN)**

(72) Inventors:
• **MENG, Xianhui**
  **Anhui 230601 (CN)**
• **MA, Kun**
  **Anhui 230601 (CN)**
• **CHEN, Shuai**
  **Anhui 230601 (CN)**
• **LAI, Junhui**
  **Anhui 230601 (CN)**

(74) Representative: **Torggler & Hofmann
Patentanwälte - Innsbruck
Torggler & Hofmann Patentanwälte GmbH & Co
KG
Wilhelm-Greil-Straße 16
6020 Innsbruck (AT)**

(54) **GRAPHITE NEGATIVE ACTIVE MATERIAL, NEGATIVE ELECTRODE PLATE SECONDARY BATTERY AND DEVICE**

(57) Disclosed are a graphite negative active material, a negative electrode plate, a secondary battery, and a device. The graphite negative active material satisfies $215 \leq La \times S + La \times G \leq 256$, wherein S is the structural strength of the graphite negative active material, wherein the structural strength is the ratio of the volume average diameter Dv50 after powder compaction under a pressure of 20 KN to the volume average diameter Dv50 before powder compaction of the graphite negative active material; La is the crystallite size of the graphite negative active material in the a-axis direction measured by XRD in units of nm; and G is the degree of graphitization of the graphite negative active material. The secondary battery of the disclosure has superior high-temperature storage performance and calendar life.

EP 4 685 111 A1

**Description**

**TECHNICAL FIELD**

The disclosure relates to a negative electrode active material, in particular to a graphite negative active material, a negative electrode plate, a secondary battery, and a device, which relates to the field of battery materials.

**BACKGROUND**

The development of electric vehicles has become one of the important approaches to save energy and reduce emissions. A traction battery is an important core component of an electric vehicle. For a battery swapping system, a traction battery having a long lifetime not only can benefit electric vehicle users and prolong the service life and warranty period of the battery, but also can reduce the operating costs for enterprises and achieve greater benefits.
Therefore, a new technical solution is needed in the art to solve the problem described above.

**SUMMARY**

In view of the deficiencies of the prior art, the disclosure provides a graphite negative active material, a negative electrode plate, a secondary battery, and a device. The secondary battery of the disclosure has an effectively improved capacity recovery rate by adjusting the crystallite sizes La and Lc, the structural strength and the degree of graphitization of a graphite negative active material.
A first aspect of the disclosure provides a graphite negative active material, which satisfies:

$$215 \leq La \times S + La \times G \leq 256$$

wherein S is the structural strength of the graphite negative active material, in which the structural strength being a ratio of the volume average diameter Dv50 after powder compaction under a pressure of 20 KN to the volume average diameter Dv50 before powder compaction of the graphite negative active material; La is the crystallite size of the graphite negative active material in the a-axis direction measured by XRD in units of nm; and G is the degree of graphitization of the graphite negative active material.
A second aspect of the disclosure provides a negative electrode plate, including a negative electrode current collector and a negative electrode active material layer on a surface of the negative electrode current collector, wherein the negative electrode active material layer includes the graphite negative active material according to the first aspect.
A third aspect of the disclosure provides a secondary battery, including a negative electrode plate according to the second aspect and a positive electrode plate.
A fourth aspect of the disclosure provides a device, including a secondary battery according to the third aspect.
The graphite negative active material provided by the disclosure has a long lifespan, and the secondary battery including the graphite negative active material has a high capacity recovery rate. The graphite negative active material of the disclosure can be used not only in traction batteries for electric vehicles to meet requirements of battery swapping scenarios, but also in energy storage batteries, meeting various application scenarios.

**DETAILED DESCRIPTION OF EMBODIMENTS**

For the sake of brevity, only certain numerical ranges are specifically disclosed in the disclosure. However, any lower limit may be combined with any upper limit to form an unspecified range; moreover, any lower limit may be combined with other lower limits to form unspecified ranges; likewise, any upper limit may be combined with any other upper limit to form an unspecified range. In addition, each individually disclosed point or individual numerical value itself may serve as a lower or upper limit and be combined with any other point or individual numerical value, or with other lower or upper limit to form an unspecified range.
Unless otherwise stated, the terms used in the disclosure have the meanings commonly understood by those skilled in the art. Unless otherwise stated, the numerical values of the parameters mentioned in the disclosure can be measured by various measuring methods commonly used in the art (e.g., according to the methods given in the examples of the disclosure).
The list of items connected by the term "at least one of" or other similar terms may mean any combination of the listed items. For example, if items A and B are listed, the phrase "at least one of A and B" means only A; only B; or A and B. In another example, if items A, B and C are listed, the phrase "at least one of A, B and C" means only A; or only B; only C; A and B (excluding C); A and C (excluding B); B and C (excluding A); or all of A, B and C. Item A may include a single component or a plurality of components. Item B may include a single component or a plurality of components. Item C may include a single component or a plurality of components.

The term "structural strength" refers to the ratio of the volume average diameter Dv50 of the graphite negative active material after powder compaction under a pressure of 2 t (20 KN) to the volume average diameter Dv50 before powder compaction.

I. Graphite negative active material

The graphite negative active material provided in the disclosure satisfies: $215 \le La \times S + La \times G \le 256$, where S is the structural strength of the graphite negative active material, wherein the structural strength is the ratio of the volume average diameter Dv50 after powder compaction under a pressure of 20 KN to the volume average diameter Dv50 before powder compaction of the graphite negative active material; La is the crystallite size of the graphite negative active material in the a-axis direction measured by XRD in units of nm; and G is the degree of graphitization of the graphite negative active material. In the disclosure, by rationally adjusting La, structural strength S, and graphitization degree G of the graphite negative active material, the distribution of the edge and basal planes (an edge plane is a lithium-ion intercalation/deintercalation plane, and a basal plane is a lithium-intercalation-free plane) of the negative electrode active materials is adjusted to improve the capacity recovery rate; thus, the distribution of edge planes is expanded and the distribution of basal planes is reduced to some extent to achieve interface adjustment and control, leading to reduced lithium intercalation sites and surface activity of the negative electrode active material to some extent, thereby achieving better high-temperature storage performance, such as a high capacity recovery rate. The graphite negative active material of the disclosure has high initial charge/discharge efficiency, and a secondary battery comprising the graphite negative active material has excellent high-temperature storage performance. Therefore, the graphite negative active material of the disclosure can be used not only in traction batteries for electric vehicles, but also in energy storage batteries, meeting various application scenarios.

In some embodiments, $218 \le La \times S + La \times G \le 252$. Excessively large La×S+La×G will cause graphite crystallites to be approximate to ideal graphite in the transverse direction, making them more likely to break and fail, thereby leading to a decrease in high-temperature storage performance and long-term cycle capacity, as well as a reduction in lifespan; and an excessively small La×S+La×G indicates that graphite crystallites deviate from a graphite structure in the transverse direction, resulting in reduced capacity and impacting the energy density. In some embodiments, La×S+La×G is 218, 220, 225, 230, 235, 240, 245, 250 or 255, or in any range therebetween.

In some embodiments, $81 \le Lc \times S + Lc \times G \le 100$, where The c-axis (Lc) is the crystallite size of the graphite negative active material in the c-axis direction measured by XRD in units of nm. Excessively large Lc×S+Lc×G will cause graphite crystallites to be approximate to ideal graphite in the longitudinal direction to lead to a too-thick layered structure and a morphology that tends to be square rather than spherical, making it difficult to process and unsuitable for production; and an excessively small Lc×S+Lc×G indicates that the graphite crystallites deviate from a graphite structure in the longitudinal direction, resulting in excessively thin layers, which will lead to an unstable structure, low capacity, low strength, and easy slippage failure of the layers. In some embodiments, Lc×S+Lc×G is 81, 86, 91, 92, 93, 94, 95, 96, 97, 98, 99 or 100, or in any range therebetween. In some embodiments, $85 \le Lc \times S + Lc \times G \le 100$.

In some embodiments, $0.952 \le S \le 0.982$. A high structural strength not only results in a relatively low expansion during lithium intercalation, but also can effectively alleviate the degree of damage to graphite particles by a rolling process; meanwhile, it reduces the delamination of graphite layers during cycling and high-temperature storage performance and decreases the surface defects of graphite, thus being beneficial for improving the cycle performance and high-temperature storage performance. However, an excessively high structural strength is not conducive to the diffusion of lithium ions, resulting in decreased rate performance. In some embodiments, S is 0.952, 0.957, 0.962, 0.967, 0.972, 0.977 or 0.982, or in any range therebetween. In some embodiments, $0.955 \le S \le 0.982$.

In some embodiments, $90.5\% \le G \le 95.0\%$. In some embodiments, G is 90.5%, 92%, 93%, 94% or 95%, or in any range therebetween.

In some embodiments, $117 \le La \le 154$. La represents the crystallite size of graphite in the transverse direction (i.e. the a-axis direction). An excessively large La is too large which will lead to a too-wide layered structure, resulting in graphite having too many basal planes and fewer edge planes, thereby leading to few paths for lithium intercalation, slowing lithium-ion intercalation, and slowing charging speed, which can not meet daily usage needs. An excessively small La is too small which will result in too many edge planes, enabling graphite to have more active sites for lithium intercalation. This is not beneficial for storage performance and shortens the service life of a battery. In some embodiments, La is 117, 122, 132, 137, 141, 146, 150, 151, 152, 153 or 154, or in any range therebetween. In some embodiments, $123 \le La \le 153$.

In some embodiments, $47 \le Lc \le 60$. Lc represents the crystallite size of graphite in the longitudinal direction (the c-axis direction). Lc is too large, which will cause the layered structure to be thick, resulting in increased edge planes, which is not beneficial for storage performance and can reduce the calendar life. Lc is too small, which will cause the layered structure to be thin, such that the strength of graphite will be decreased and the graphite become fragile, leading to the graphite having low capacity and poor cycling performance, and the like. In some embodiments, Lc is 47, 50, 52, 56, 58 or 60, or in any range therebetween. In some embodiments, $47.2 \leq Lc \leq 59.5$.

According to an embodiment of the disclosure, the preparation of the negative electrode active material includes the following steps: 1. preparation of primary-particle graphite: subjecting a precursor (needle coke, pitch coke, petroleum coke, and the like, may be selected as required) to crushing, graphitization in which the temperature of graphitization is greater than or equal to 2400°C and less than or equal to 2800°C, and finished-product processing to obtain the primary-particle graphite; 2. preparation of secondary-particle graphite: subjecting a precursor, in which needle coke, pitch coke, petroleum coke, and the like may be selected as required, to crushing, coating with the content of coating agent ranging from 2% to 4%, and granulation, and graphitization, in which the temperature of graphitization is greater than or equal to 2400°C and less than or equal to 2800°C, to obtain the secondary-particle graphite; and 3. preparation of the graphite negative active material: mixing the primary-particle graphite and the secondary-particle graphite, with the mass ratio of the secondary-particle graphite to the primary-particle graphite ranging from 1 to 2, to obtain the graphite negative active material: 1. Certainly, the method for preparing the negative electrode active material is not limited to this, and other methods well known in the art can also be used.

In some embodiments, the positive electrode active material layer includes a positive electrode active material, and the positive electrode active material includes at least one of a nickel-cobalt ternary material and a phosphate material.

In some embodiments, the nickel-cobalt ternary material includes at least one of $LiNi_mCo_nA(1\text{-}m\text{-}n)O2$ materials, where A is selected from at least one of manganese, aluminum, magnesium, chromium, calcium, zirconium, molybdenum, silver and niobium, $0.5 \leq m \leq 1$, $0 \leq n \leq 0.5$, and $m + n \leq 1$.

In some embodiments, m is 0.55, 0.6, 0.65, 0.7, 0.75, 0.8, 0.85, 0.9 or 0.95, or in a range composed of any two of these values. In some embodiments, n is 0.05, 0.1, 0.15, 0.2, 0.25, 0.3, 0.35, 0.4 or 0.45, or in a range composed of any two of these values.

In some embodiments, the nickel-cobalt ternary material includes at least one of NCA, NCM111, NCM523, NCM622, NCM811, Ni90, Ni92, and Ni95.

In some embodiments, the phosphate material includes at least one of $LiMn_kB_{(1\text{-}k)}PO_4$, where $0 \leq k \leq 1$, and the B element is selected from at least one of iron, cobalt, magnesium, calcium, zinc, chromium, and lead. In some embodiments, k is 0.1, 0.15, 0.2, 0.25, 0.3, 0.35, 0.4, 0.45, 0.5, 0.55, 0.6, 0.65, 0.7, 0.75, 0.8, 0.85, 0.9 or 0.95, or in a range composed of any two of these values. In some embodiments, the phosphate material includes at least one of lithium iron phosphate, $LiMn_{0.6}Fe_{0.4}PO_4$, and $LiMn_{0.8}Fe_{0.2}PO_4$.

In some embodiments, the positive electrode active material includes at least one of lithium nickel oxide, lithium nickel cobalt aluminum oxide, lithium nickel cobalt manganese oxide, lithium nickel manganese cobalt magnesium oxide, lithium manganese oxide, lithium nickel manganese oxide, lithium iron phosphate, and lithium manganese iron phosphate.

In some embodiments, the positive electrode active material layer further includes a binder, and optionally a conductive material. The binder improves the bonding between the positive electrode active material particles, and also improves the bonding of the positive electrode active material with the current collector.

In some embodiments, the binder includes, but is not limited to, polyvinyl alcohol, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, poly(1,1-difluoroethylene), polyethylene, polypropylene, styrene-butadiene rubber, acrylated styrene-butadiene rubber, epoxy resin, nylon, etc.

In some embodiments, the conductive material includes, but is not limited to, a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum or silver. In some embodiments, the conductive polymer is a polyphenylene derivative.

In some embodiments, the positive electrode further includes a positive electrode current collector, which may be a metal foil or a composite current collector. For example, an aluminum foil may be used. The composite current collector may be formed by forming a metal material (copper, a copper alloy, nickel, a nickel alloy, titanium, a titanium alloy, silver and a silver alloy) on a polymer substrate.

In some embodiments, the negative electrode includes a negative electrode active material layer, the negative electrode active material layer includes a negative electrode active material, and the negative electrode active material includes a silicon-based material, or a mixture of a silicon-based material with at least one material selected from a carbon-based material, a tin-based material, a phosphorus-based material and lithium metal.

In some embodiments, the negative electrode active material layer further includes a binder and a conductive agent. In some embodiments, the binder includes, but is not limited to, polyvinyl alcohol, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, poly(1,1-difluoroethylene), polyethylene, polypropylene, styrene-butadiene rubber, acrylated styrene-butadiene rubber, epoxy resin, nylon, etc.

In some embodiments, the conductive agent includes, but is not limited to, a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum or silver. In some embodiments, the conductive polymer is a polyphenylene derivative.

In some embodiments, the negative electrode further includes a negative electrode current collector, and the negative electrode current collector includes a copper foil, a nickel foil, a stainless-steel foil, a titanium foil, nickel foam, copper foam, a polymer substrate covered with a conductive metal, or any combination thereof.

In some embodiments, a separator is disposed between the positive electrode plate and the negative electrode plate to prevent short circuits. The material and shape of the separator that can be used in the examples of the disclosure are not particularly limited, and may be any technique disclosed in the prior art. In some embodiments, the separator includes a polymer, an inorganic substance, and the like, which are formed from a material that is stable to the electrolyte of the disclosure. In some embodiments, the separator may be selected from a polyethylene film, a polypropylene film, a polyvinylidene fluoride film, and a multi-layer composite film thereof.

For example, the separator may include a substrate layer and a surface treatment layer. The substrate layer is a nonwoven fabric, film or composite film with a porous structure, and the material of the substrate layer includes at least one of polyethylene, polypropylene, polyethylene terephthalate and polyimide. In particular, a porous polypropylene film, a porous polyethylene film, a polypropylene nonwoven fabric, a polyethylene nonwoven fabric, or a porous polypropylene-polyethylene-polypropylene composite film may be used.

At least one surface of the substrate layer is provided with a surface treatment layer, which may be a polymer layer or an inorganic substance layer, or a layer formed by mixing a polymer and an inorganic substance.

The inorganic substance layer includes inorganic particles and a binder. The inorganic particles include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder includes at least one of polyvinylidene fluoride, a vinylidene fluoride-hexafluoropropylene copolymer, polyamide, polyacrylonitrile, a polyacrylate ester, polyacrylic acid, a polyacrylate salt, polyvinylpyrrolidone, polyethylene ether, polymethyl methacrylate, polytetrafluoroethylene, and polyhexafluoropropylene.

The polymer layer includes a polymer, and the material of the polymer includes at least one of polyamide, polyacrylonitrile, an acrylate polymer, polyacrylic acid, polyacrylate, polyvinylpyrollidone, polyvinyl ether, polyvinylidene fluoride, and poly(vinylidene fluoride-hexafluoropropylene).

When the secondary battery is a lithium-ion secondary battery, as a non-aqueous electrolyte, a solution of a lithium salt dissolved in an organic solvent is typically used, where the lithium salt may be an inorganic lithium salt (e.g., $LiClO_4$, $LiPF_6$, $LiBF_4$, $LiAsF_6$, and $LiSbF_6$), or an organic lithium salt (e.g., $LiCF_3SO_3$, $LiCF_3CO_2$, $Li_2C_2F_4(SO_3)_2$, $LiN(CF_3SO_2)_2$, $LiC(CF_3SO_2)_3$, and $LiC_nF_{2n+1}SO_3$ ($n \geq 2$)). The organic solvent used in the non-aqueous electrolyte includes a cyclic carbonate (e.g., ethylene carbonate, propylene carbonate, butylene carbonate, or vinylene carbonate), a chain carbonate (e.g., dimethyl carbonate, diethyl carbonate, or ethyl methyl carbonate), a chain ester (e.g., methyl propionate), a cyclic ester (e.g., $\gamma$-butyrolactone), dimethoxyethane, a chain ether (e.g., diethyl ether, diglyme or triglyme), a cyclic ether (e.g., tetrahydrofuran or 2-methyltetrahydrofuran), acetonitrile, propionitrile, or a combination thereof.

The lithium-ion secondary battery consists of a negative electrode plate, a positive electrode plate, a separator and an electrolyte, where the positive and negative electrode plates are infiltrated in the electrolyte, and lithium ions move between the positive and negative electrodes with the electrolyte as a medium, thus achieving the charge/discharge of the battery. To avoid short circuits of the positive and negative electrodes through the electrolyte, it is necessary to use a separator to isolate the positive and negative electrode plates. The lithium-ion secondary battery may be in the form of, for example, a tubular (prismatic or cylindrical) battery with an aluminum or steel case, or a pouch cell with an aluminum plastic film as a case.

In some embodiments, the secondary battery is a lithium secondary battery or a sodium secondary battery. In some embodiments, the secondary battery includes, but is not limited to, a lithium metal secondary battery, a lithium-ion secondary battery, a lithium polymer secondary battery, or a lithium-ion polymer secondary battery.

In some embodiments, the secondary battery may include an outer package, which may be a hard case, such as a hard plastic case, an aluminum case, and a steel case. The outer package of the secondary battery may also be a soft case, and the soft case may be made of plastic, e.g., one or more of polypropylene (PP), polybutylene terephthalate (PBT), polybutylene succinate (PBS), etc.

In some embodiments, the shape of the secondary battery is not particularly limited, and may be cylindrical, square, or any other shape.

In some embodiments, the disclosure further provides a battery module. The battery module includes the secondary battery described above. The battery module of the disclosure uses the secondary battery described above and thus has at least the same advantages as those of the secondary battery described above. The battery module of the disclosure may contain a plurality of secondary batteries, the specific number of which can be adjusted according to the application and capacity of the battery module.

In some embodiments, the disclosure further provides a battery pack including the battery module described above. The number of battery modules contained in the battery pack can be adjusted according to the application and capacity of the battery pack.

II. Device

The disclosure further provides a device, including at least one of the secondary battery, battery module, and battery pack described above.

In some embodiments, the device includes, but is not limited to, an electric vehicle, a hybrid electric vehicle, a plug-in hybrid electric vehicle, an energy storage system, etc. A battery pack or battery module can be used to meet the device's high power and high energy density requirements for secondary batteries.

In other embodiments, the device may be a mobile phone, a tablet PC, or a laptop, etc. The device is usually required to be light and thin and can use the secondary battery as a power supply.

Examples and comparative examples

To make the objectives, technical solutions and beneficial technical effects of the disclosure clearer, the disclosure is further described in detail below in conjunction with examples. However, it should be appreciated that the examples of the disclosure are simply intended to explain instead of limiting the disclosure, and the examples of the disclosure are not limited to those given in the description. Any unspecified experimental condition or operational condition in the examples is made in accordance with conventional conditions or those recommended by material suppliers.

The artificial graphite in the following examples and comparative examples is commercially available.

Example 1

Preparation of positive electrode plate: a positive electrode active material of lithium iron phosphate, a conductive agent of Super P, and a binder of polyvinylidene fluoride (PVDF) were mixed in a mass ratio of 97 : 1.4 : 1.6, and added to a solvent of N-methylpyrrolidone (NMP), and the resulting mixture was uniformly stirred via a vacuum mixer to obtain a positive electrode slurry with a solid content of 60 wt%; and the positive electrode slurry was uniformly coated onto a positive electrode current collector of an aluminum foil and dried at 85°C, followed by cold pressing, trimming, slicing, slitting, and finally drying at 85°C under vacuum for 4 h to obtain a positive electrode plate.

Preparation of negative electrode plate: artificial graphite, conductive carbon black SP, sodium carboxymethyl cellulose (CMC), and styrene-butadiene rubber (SBR) were uniformly stirred in a mass ratio of 94.5 : 1.5 : 1.5 : 1.5 in water to prepare a negative electrode slurry, and the negative electrode slurry was uniformly coated onto a copper foil using a coater, placed in a vacuum drying oven for drying under vacuum at a temperature of 110°C for 4 hours, and then pressed into a plate to prepare the negative electrode plate.

Preparation of electrolyte: ethylene carbonate (EC), ethyl methyl carbonate (EMC), and diethyl carbonate (DEC) were mixed in a volume ratio of 1 : 1 : 1, and a well-dried lithium salt (LiPF6) was then dissolved in the mixed organic solvent at a ratio of 1 mol/L to prepare an electrolyte.

Preparation of separator: a polyethylene film was used.

Assembly of battery: The positive electrode plate, the separator, and the negative electrode plate described above were stacked in sequence, with the separator between the positive electrode plate and the negative electrode plate to play a role of isolation, and wound to obtain a bare cell. The bare cell was placed in an outer packaging case, and the prepared electrolyte above was injected into the dried bare cell, followed by procedures of vacuum packaging, leaving to stand, formation, shaping, etc., to obtain a lithium-ion secondary battery.

Examples 2-5 and Comparative examples 1-3 were implemented by adjusting the degree of graphitization of the negative electrode active material, etc., on the basis of Example 1, and the specific adjustments and detailed data were shown in Table 1.

Test method:

1. Determination of degree of graphitization G

60 parts by mass of a prepared negative electrode active material and 40 parts by mass of a silicon powder (FUJIFILM Wako Pure Chemical Corporation, purity: 99.9%) were mixed for 5 minutes using an agate mortar, and the resulting mixture was placed in a unit for X-ray diffraction determination. A diffraction angle corresponding to the (002) plane of graphite and a diffraction angle corresponding to the (111) plane of silicon were determined by X-ray diffraction ($2\theta$ = 25°-29°) using CuK$\alpha$ radiation, using an X-ray diffraction determination device (X-RAY DIFFRACTIOMETER Multiplex) from Rigaku Corporation.

The observed diffraction angles of silicon and graphite were corrected using the theoretical diffraction angle of Si ($2\theta$ = 28.442) to obtain the correct diffraction angle of graphite.

The interplanar spacing of the d(002) plane of the negative electrode active material was calculated using the Bragg equation ($2d\sin\theta = n\lambda$), and the degree of graphitization was calculated according to the equation below.

Degree of graphitization = [(3.44 - interplanar spacing) ÷ (0.086)] × 100%.

2. Determination of structural strength S

3 g of graphite powder was placed in a powder compactor and maintained at a pressure equivalent to a weight of 2 t for 30 s, and the compacted graphite powder was removed for a particle size distribution test. Structural strength S = Dv50 of the graphite after treatment under a pressure of 2 t (denoted as Dv50-2t)/Dv50 of the graphite before treatment (denoted as Dv50-initial).

3. Determination of crystallite sizes La and Lc

Both La and Lc were obtained after testing and analysis using a D8 Advance X-ray diffractometer from Bruker AXS GmbH, Germany, the XRD was calibrated using a silicon internal standard method, and La and Lc were calculated according to the Scherrer equation.

4. Determination of capacity recovery rate

At an ambient temperature of 25°C, a fresh pouch cell (a lithium-ion battery) was charged at a constant current of 0.1C with a cut-off voltage of 3.65 V, and then discharged at a constant current of 0.1C with a cut-off voltage of 2.1 V The capacity of the first discharge was recorded as a baseline value for calculation. The cell was charged at a constant current of 0.1C with a cut-off voltage of 3.65 V until fully charged, and the fully charged cell was placed in a constant-temperature box at 60°C for storage for 30 days without opening the box. After 30 days, the cell was removed and left to stand at an ambient temperature of 25°C for 6-8 h. After restoring to 25°C, the cell was subjected to a discharge test including discharging at a constant current of 0.1C with a cut-off voltage of 2.1 V, and the discharge capacity at this time was recorded as the discharge capacity after storage at 60°C for 30 days. The capacity recovery rate after storage at 60°C for 30 days was calculated according to the following equation:

$$\frac{\text{Discharge capacity after storage at } 60°\text{C for 30 days}}{\text{Initial discharge capacity}} \times 100\%$$

Test results are shown in Table 1.

Table 1

| | Structural strength S | La/nm | Lc/nm | Degree of graphitization G | La × S + La × G | Lc × S + Lc × G | capacity recovery rate after storage at 60°C for 30 days |
|---|---|---|---|---|---|---|---|
| Example 1 | 0.959 | 125.05 | 47.47 | 94.12% | 220.04 | 87.89 | 92.62% |
| Example 2 | 0.972 | 141.27 | 52.60 | 94.15% | 238.91 | 96.96 | 92.60% |
| Example 3 | 0.976 | 146.26 | 55.29 | 94.18% | 244.40 | 98.26 | 91.95% |
| Example 4 | 0.979 | 150.50 | 57.98 | 94.22% | 249.02 | 98.91 | 91.91% |

(continued)

| | Structural strength S | La/nm | Lc/nm | Degree of graphitization G | La × S + La × G | Lc × S + Lc × G | capacity recovery rate after storage at 60°C for 30 days |
|---|---|---|---|---|---|---|---|
| Example 5 | 0.981 | 152.50 | 59.38 | 94.38% | 251.06 | 99.14 | 91.86% |
| Comparative example 1 | 0.951 | 115.82 | 47.01 | 94.09% | 210.28 | 80.39 | 87.57% |
| Comparative example 2 | 0.983 | 155.24 | 61.44 | 94.46% | 257.61 | 100.29 | 88.02% |
| Comparative example 3 | 0.988 | 161.98 | 67.17 | 94.53% | 262.33 | 101.84 | 88.06% |

As can be seen from Table 1, the secondary batteries of the disclosure have superior high-temperature storage performance and calendar life, with a capacity recovery rate of 91.8% or more after being stored at 60°C for 30 days.

Although some exemplary embodiments of the disclosure have been illustrated and described, the disclosure is not limited to the disclosed embodiments. Rather, those of ordinary skill in the art will recognize that some modifications and changes may be made to the described embodiments without departing from the scope of the disclosure as described in the appended claims.

**Claims**

1. A graphite negative active material, wherein the graphite negative active material satisfies:

$$215 \leq La \times S + La \times G \leq 256$$

wherein S is the structural strength of the graphite negative active material, in which the structural strength is the ratio of the volume average diameter Dv50 after powder compaction under a pressure of 20 KN to the volume average diameter Dv50 before powder compaction of the graphite negative active material;

La is the crystallite size of the graphite negative active material in the a-axis direction measured by XRD in units of nm; and
G is the degree of graphitization of the graphite negative active material.

2. The graphite negative active material according to the claim 1, wherein $218 \leq La \times S + La \times G \leq 252$.

3. The graphite negative active material according to the claim 1 or 2, wherein

$$81 \leq Lc \times S + Lc \times G \leq 100$$

wherein Lc is the crystallite size of the graphite negative active material in the c-axis direction measured by XRD in units of nm.

4. The graphite negative active material according to the claim 3, wherein $85 \leq Lc \times S + Lc \times G \leq 100$.

5. The graphite negative active material according to any one of claims 1-4, wherein the graphite negative active material satisfies at least one of the following:

$$0.952 \leq S \leq 0.982;$$

$$90.5\% \leq G \leq 95.0\%;$$

$$117 \leq La \leq 154;$$

and

$$47.1 \leq Lc \leq 60.$$

6. The graphite negative active material according to the claim 5, wherein the graphite negative active material satisfies at least one of the following:

$$0.955 \leq S \leq 0.982;$$

$$123 \leq La \leq 153;$$

and

$$47.2 \leq Lc \leq 59.5.$$

7. A negative electrode plate, comprising a negative electrode current collector and a negative electrode active material layer on a surface of the negative electrode current collector, wherein the negative electrode active material layer comprises the negative electrode active material according to any one of claims 1-6.

8. A secondary battery, comprising a negative electrode plate according to claim 7 and a positive electrode plate.

9. A device, comprising a secondary battery according to claim 8.

Europäisches
Patentamt

European
Patent Office

Office européen
des brevets

# EUROPEAN SEARCH REPORT

**Application Number**

EP 24 22 1510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 641 034 A1 (LG CHEMICAL LTD [KR]) 22 April 2020 (2020-04-22) * claims 1, 7, 8 * | 1-9 | INV. C01B32/21 |
| X | EP 2 211 403 B1 (NIPPON OIL CORP [JP]) 6 December 2017 (2017-12-06) * claims 1, 2; example all * | 1,7-9 | |
| X | KR 2024 0005926 A (NAT INST CLEAN & LOW CARBON ENERGY [CN]) 12 January 2024 (2024-01-12) * claims 3-5 * | 1,7-9 | |
| X | WO 2022/160332 A1 (NINGDE AMPEREX TECHNOLOGY LTD [CN]) 4 August 2022 (2022-08-04) * claim 3; example all; table 1 * | 1,7-9 | |

**TECHNICAL FIELDS SEARCHED (IPC)**

C01B

The present search report has been drawn up for all claims

| Place of search | Date of completion of the search | Examiner |
|---|---|---|
| The Hague | 13 June 2025 | Mattheis, Chris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 1510

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2025

| Patent document cited in search report | | Publication date | Patent family member(s) | | Publication date |
|---|---|---|---|---|---|
| EP 3641034 | A1 | 22-04-2020 | CN | 110870115 A | 06-03-2020 |
| | | | EP | 3641034 A1 | 22-04-2020 |
| | | | KR | 20190062319 A | 05-06-2019 |
| | | | US | 2020295351 A1 | 17-09-2020 |
| | | | WO | 2019107936 A1 | 06-06-2019 |
| EP 2211403 | B1 | 06-12-2017 | CN | 101816084 A | 25-08-2010 |
| | | | EP | 2211403 A1 | 28-07-2010 |
| | | | JP | 5415684 B2 | 12-02-2014 |
| | | | JP | 2009087871 A | 23-04-2009 |
| | | | KR | 20100063798 A | 11-06-2010 |
| | | | US | 2010209331 A1 | 19-08-2010 |
| | | | WO | 2009044789 A1 | 09-04-2009 |
| KR 20240005926 | A | 12-01-2024 | CN | 115472829 A | 13-12-2022 |
| | | | JP | 2024522636 A | 21-06-2024 |
| | | | KR | 20240005926 A | 12-01-2024 |
| | | | US | 2024262692 A1 | 08-08-2024 |
| | | | WO | 2022257373 A1 | 15-12-2022 |
| WO 2022160332 | A1 | 04-08-2022 | CN | 113795947 A | 14-12-2021 |
| | | | CN | 116885176 A | 13-10-2023 |
| | | | WO | 2022160332 A1 | 04-08-2022 |

EPO FORM P0459

For more details about this annex : see Official Journal of the European Patent Office, No. 12/82